# EUROPÄISCHE PATENTSCHRIFT

(11) **EP 3 964 556 B1**
(45) Veröffentlichungstag und Bekanntmachung des Hinweises auf die Patenterteilung: **23.08.2023**
(21) Anmeldenummer: 21204822.7
(22) Anmeldetag: 23.08.2018
(51) Int. Cl.: C09K 5/04, G01N 17/00

(54) **PRÜFKAMMER**
TEST CHAMBER
CHAMBRE D'ESSAI

(30) Priorität: 08.09.2017 DE 102017120786; 14.09.2017 DE 102017216363
(43) Veröffentlichungstag der Anmeldung: 09.03.2022
(62) Teilanmeldung aus: 18768787.6
(73) Patentinhaber: Weiss Technik GmbH, 35447 Reiskirchen (DE); Technische Universität Dresden, 01069 Dresden (DE)
(72) Erfinder: GÖPFERT, Tobias, 01159 Dresden (DE); HESSE, Ullrich, 71563 Affalterbach (DE); HAACK, Christian, 35037 Marburg (DE)
(74) Vertreter: advotec.

(56) Entgegenhaltungen:
- WO-A1-2017/157864
- DE-A1- 4 116 274
- US-A1- 2003 172 751
- DI NICOLA G ET AL: "Blends of carbon dioxide and HFCs as working fluids for the low-temperature circuit in cascade refrigerating systems", INTERNATIONAL JOURNAL OF REFRIGERATION, ELSEVIER, AMSTERDAM, NL, Bd. 28, Nr. 2, 1. März 2005 (2005-03-01), Seiten 130-140, XP025278194, ISSN: 0140-7007, DOI: 10.1016/J.IJREFRIG.2004.06.014 [gefunden am 2005-03-01]

## Beschreibung

Die Erfindung betrifft eine Prüfkammer mit einem Kältemittel sowie eine Verwendung eines Kältemittels, wobei die Prüfkammer zur Konditionierung von Luft, einen gegenüber einer Umgebung verschließbaren und temperaturisolierten Prüfraum zur Aufnahme von Prüfgut, und eine Temperiervorrichtung zur Temperierung des Prüfraums umfasst, wobei mittels der Temperiervorrichtung eine Temperatur in einem Temperaturbereich von -60 °C bis +180 °C innerhalb des Prüfraums ausbildbar ist, wobei die Temperiervorrichtung eine Kühleinrichtung mit einem Kühlkreislauf mit einem Kältemittel, zumindest einem Wärmeübertrager, einem Verdichter, einem Kondensator und einem Expansionsorgan aufweist, wobei das Kältemittel in dem Wärmeübertrager eine Phasenänderung durchläuft.

Derartige Kältemittel zirkulieren im Allgemeinen innerhalb eines geschlossenen Kühlkreislaufs von Kühleinrichtungen und erfahren nacheinander verschiedene Änderungen eines Aggregatzustandes. Dabei sollen Kältemittel sollen so beschaffen sein, dass sie in einem Kühlkreislauf innerhalb einer vorgenannten Temperaturdifferenz verwendbar sind. Aus dem Stand der Technik sind sogenannte Einstoffkältemittel und auch Kältemittelgemische aus zumindest zwei Stoffen bekannt. Eine Benennung der Kältemittel erfolgt nach DIN 8960 Absatz 6.

Infolge gesetzlicher Bestimmungen darf ein Kältemittel nicht wesentlich zum Ozonabbau in der Atmosphäre oder der globalen Erwärmung beitragen. So können im Wesentlichen keine fluorierten Gase oder chlorierten Stoffe als Kältemittel eingesetzt werden, weshalb natürliche Kältemittel beziehungsweise Gase in Frage kommen. Darüber hinaus sollte ein Kältemittel nicht brennbar sein, um unter anderem eine Befüllung, einen Versand und einen Betrieb eines Kühlkreislaufs nicht aufgrund eventuell einzuhaltender Sicherheitsvorschriften zu erschweren. Auch verteuert sich die Herstellung eines Kühlkreislaufs durch die Verwendung eines brennbaren Kältemittels infolge der dadurch erforderlichen konstruktiven Maßnahmen. Unter Brennbarkeit wird hier die Eigenschaft des Kältemittels verstanden, mit Umgebungssauerstoff unter Freisetzung von Wärme zu reagieren. Ein Kältemittel ist insbesondere dann brennbar, wenn es in die Brandklasse C nach der europäischen Norm EN2 beziehungsweise der DIN 378 Klassen A2, A2L und A3 fällt.

Darüber hinaus sollte ein Kältemittel ein relativ geringes CO₂-Äquivalent aufweisen, das heißt ein relatives Treibhauspotential oder auch Global Warming Potential (GWP) sollte möglichst gering sein, um eine indirekte Schädigung der Umwelt durch das Kältemittel bei Freisetzung zu vermeiden. Das GWP gibt an, wieviel eine festgelegte Masse eines Treibhausgases zur globalen Erwärmung beiträgt, wobei als Vergleichswert Kohlendioxid dient. Der Wert beschreibt die mittlere Erwärmungswirkung über einen bestimmten Zeitraum, wobei hier zur Vergleichbarkeit 20 Jahre festgelegt werden. Zur Definition des relativen CO₂-Äquivalents beziehungsweise GWPs wird auf den fünften Sachstandsbericht des Intergovernmental Panel on Climate Change (IPCC), Assessment Report, Appendix 8.A, Table 8.A.1 verwiesen.

Nachteilig bei Kältemitteln mit geringem GWP, beispielsweise < 2500, ist, dass diese Kältemittel in den für einen Kühlkreislauf relevanten Temperaturbereichen eine teilweise deutlich verringerte Kälteleistung im Vergleich zu Kältemitteln mit vergleichsweise größerem GWP aufweisen. Mit Kältemittelgemischen, die einen vergleichsweise hohen Masseanteil an Kohlendioxid aufweisen, kann ein niedriger GWP erzielt werden, wobei diese Kältemittelgemische aufgrund der unterschiedlichen, miteinander gemischten Stoffe zeotrope Eigenschaften aufweisen können, was wiederum bei vielen Kühlkreisläufen unerwünscht ist.

Bei einem zeotropen Kältemittelgemisch erfolgt ein Phasenübergang über einen Temperaturbereich, den sogenannten Temperaturglide. Als Temperaturglide wird dabei eine Differenz zwischen der Siedetemperatur und der Taupunkttemperatur bei konstantem Druck angesehen. Bei zeotropen Kältemittelgemischen ist regelmäßig ein hoher Masseanteil einer nicht brennbaren Komponente des Kältemittelgemisches enthalten, wobei diese sich jedoch durch einen vergleichsweise hohen GWP auszeichnet. Kohlendioxid erscheint zunächst als eine Komponente für ein Kältemittelgemisch geeignet, da dieses nicht brennbar ist und einen niedrigen GWP aufweist. Bei einer Mischung von Kohlendioxid mit einer weiteren Komponente ist jedoch wesentlich, dass, sofern die weitere Komponente brennbar ist, ein Masseanteil an Kohlendioxid vergleichsweise groß sein muss. Dies ist jedoch wiederum nachteilig, da Kohlendioxid eine Gefriertemperatur bzw. einen Gefrierpunkt von -56,6°C aufweist, was eine Erzielung von Temperaturen bis -60°C bei einer hohen Kohlendioxidkonzentration kaum ermöglicht.

Auch sollen Kältemittel möglichst einfach einsetzbar sein, d.h. keinen aufwendigen technischen Umbau einer Kühleinrichtung erfordern. Insbesondere bei Kältemitteln mit einem Temperaturglide > 3 K ist es erforderlich, ein Expansionsorgan und einen Wärmeübertrager bzw. Verdampfer des betreffenden Kühlkreislaufs an die Verdampfungstemperatur des Kältemittels anzupassen und eine entsprechende Regelung vorzusehen. Weiter ist zu unterscheiden zwischen Kältemitteln, die für einen statischen Betrieb einer Kühleinrichtung, d.h. einer Kühleinrichtung mit einer im Wesentlichen über einen längeren Zeitraum konstanten Temperatur am Wärmetauscher bzw. Verdampfer, und einer dynamischen Kühleinrichtung mit einem vergleichsweise schnellen Temperaturwechsel am Wärmeübertrager ausgebildet sind. Derartige dynamische Kühleinrichtungen sind unter anderem in Prüfkammern verbaut, so dass ein verwendetes Kältemittel innerhalb eines großen Temperaturbereichs einsetzbar sein muss.

Prüfkammern werden regelmäßig zur Überprüfung von physikalischen und/oder chemischen Eigenschaften von Gegenständen, insbesondere Vorrichtungen eingesetzt. So sind Temperaturprüfschränke oder Klimaprüfschränke bekannt, innerhalb derer Temperaturen in einem Bereich von -60°C bis +180°C eingestellt werden können. Bei Klimaprüfschränken können ergänzend gewünschte Klimabedingungen eingestellt werden, denen dann die Vorrichtung beziehungsweise das Prüfgut über einen definierten Zeitraum ausgesetzt wird. Derartige Prüfkammern sind regelmäßig beziehungsweise teilweise als ein mobiles Gerät ausgebildet, welches lediglich mit erforderlichen Versorgungsleitungen mit einem Gebäude verbunden ist und alle zur Temperierung und Klimatisierung erforderlichen Baugruppen umfasst. Eine Temperierung eines das zu prüfende Prüfgut aufnehmenden Prüfraums erfolgt regelmäßig in einem Umluftkanal innerhalb des Prüfraums. Der Umluftkanal bildet einen Luftbehandlungsraum im Prüfraum aus, in dem Wärmetauscher zur Erwärmung oder Kühlung der den Umluftkanal beziehungsweise den Prüfraum durchströmenden Luft angeordnet sind. Dabei saugt ein Lüfter beziehungsweise ein Ventilator die im Prüfraum befindliche Luft an und leitet sie im Umluftkanal zu den jeweiligen Wärmetauschern. Das Prüfgut kann so temperiert oder auch einem definierten Temperaturwechsel ausgesetzt werden. Während eines Prüfintervals kann dann eine Temperatur zwischen einem Temperaturmaximum und einem Temperaturminimum der Prüfkammer wiederholt wechseln. Eine derartige Prüfkammer ist beispielsweise aus der EP 0 344 397 A2 und der US 2003/0172751 A1 bekannt.

Das in einem Kühlkreislauf zirkulierende Kältemittel muss so beschaffen sein, dass es im Kühlkreislauf innerhalb der vorgenannten Temperaturdifferenz verwendbar ist. Insbesondere kann eine Taupunkttemperatur des Kältemittels nicht höher sein als eine minimale Temperatur des zu erreichenden Temperaturbereiches des Kühlkreislaufs, da sonst bei einem Verdampfen des Kältemittels in dem Wärmeübertrager, der zur Kühlung des Prüfraums dient, die minimale Temperatur nicht erreichbar wäre. Die Taupunkttemperatur von azeotropischen Kältemitteln wird unmittelbar nach dem Expansionsorgan in dem Wärmeübertrager erreicht. Gerade Kühlkreisläufe für Prüfräume erfordern zur präzisen Temperierung der Prüfkammer eine sehr hohe räumliche Temperaturkonstanz, wie sie mit zeotropischen Kältemitteln nicht oder nur mit Einschränkungen erzielbar ist. Eine hohe Temperaturkonstanz ist hier nicht erzielbar, da sich die Taupunkttemperatur beziehungsweise ein Taupunkt des zeotropischen Kältemittels in Abhängigkeit einer Temperatur im Prüfraum im Bereich des Wärmetauschers im Prüfraum durch Temperaturdifferenzen örtlich verschieben kann. Eine Verwendung zeotropischer Kältemittel beziehungsweise von Kältemitteln mit Temperaturglide in Kühlkreisläufen von Prüfkammern wird daher vermieden.

Weiter sind Kühleinrichtungen bekannt, bei denen ein zeotropes Kältemittelgemisch sukzessive verdampft wird. Das heißt Stoffkomponenten des Kältemittels werden nacheinander über ein Expansionsorgan verdampft. Derartige Kühleinrichtungen werden auch als Gemischkaskadenanlage bezeichnet und sind zur Ausbildung einer im Wesentlichen statischen Tieftemperatur geeignet.

Der vorliegenden Erfindung liegt daher die Aufgabe zugrunde, eine Prüfkammer mit einem Kältemittel sowie eine Verwendung eines Kältemittels vorzuschlagen, mit der Temperaturen bis mindestens -60°C umweltfreundlich und sicher erzielbar sind.

Diese Aufgabe wird durch eine Prüfkammer mit den Merkmalen des Anspruchs 1 und eine Verwendung eines Kältemittels mit den Merkmalen des Anspruchs 13 gelöst.

Bei der erfindungsgemäßen Prüfkammer zur Konditionierung von Luft, umfasst diese einen gegenüber einer Umgebung verschließbaren und temperaturisolierten Prüfraum zur Aufnahme von Prüfgut, und eine Temperiervorrichtung zur Temperierung des Prüfraums, wobei mittels der Temperiervorrichtung eine Temperatur in einem Temperaturbereich von -60 °C bis +180 °C innerhalb des Prüfraums ausbildbar ist, wobei die Temperiervorrichtung eine Kühleinrichtung mit einem Kühlkreislauf mit einem Kältemittel, zumindest einem Wärmeübertrager, einem Verdichter, einem Kondensator und einem Expansionsorgan aufweist, wobei das Kältemittel in dem Wärmeübertrager eine Phasenänderung durchläuft, wobei das Kältemittel ein Kältemittelgemisch aus einem Masseanteil Kohlendioxid und einem Masseanteil mindestens einer weiteren Komponente ist, wobei der Masseanteil Kohlendioxid an dem Kältemittelgemisch 30 bis 33 Masseprozent beträgt, wobei die weitere Komponente Pentafluorethan ist, wobei der Masseanteil Pentafluorethan 67 bis 70 Masseprozent beträgt.

Kohlendioxid (CO₂) ist auch als Kältemittel bzw. Komponente unter der Bezeichnung R744, Pentafluorethan (C₂HF₅) unter der Bezeichnung R125 und Difluormethan (CH₂F₂) unter der Bezeichnung R32, Trifluorethylen unter der Bezeichnung R1123, 1,1-Difluorethen (C₂H₂F₂) unter der Bezeichnung R-1132a, Fluorethen (C₂H₃F) unter der Bezeichnung R1141 gemäß DIN 8960 in der zuletzt gültigen Fassung vor dem Prioritätstag der Anmeldung bekannt.

Erfindungsgemäß ist ein Kältemittelgemisch aus Kohlendioxid und einem bzw. mehreren fluorierten Kältemitteln vorgesehen, die einen geringen GWP aufweisen und nicht oder eingeschränkt brennbar sind. Ein Anteil an Kohlendioxid muss dabei möglichst gering sein, da sonst ein Gefrierpunkt des Kältemittelgemisches mit einem steigenden Masseanteil von Kohlendioxid zunimmt. Ein geringerer Masseanteil an Kohlendioxid mindert jedoch eine das GWP reduzierende Wirkung des Kohlendioxids. So weisen teilfluorierte Kältemittel einen deutlich höheren GWP als Kohlendioxid auf, wobei diese jedoch auch eine verbesserte brandhemmende Wirkung haben. Insbesondere Pentafluorethan und Difluormethan enthalten eine erhebliche Menge an Fluoratomen, was zu einem unerwünscht hohen GWP führt. Wie sich überraschenderweise herausgestellt hat, kann jedoch mit einem Kältemittelgemisch mit einem Masseanteil Kohlendioxid von 30 bis 40 Masseprozent mit Pentafluorethan ein ausreichend niedriger GWP, d.h. beispielsweise < 150 erzielt werden. Wie sich ebenfalls herausgestellt hat ist eine brandhemmende Wirkung von Pentafluorethan vergleichsweise größer als die von Kohlendioxid. Durch ein Hinzufügen von Difluormethan als dritte Komponente des Kältemittelgemisches können die negativen Eigenschaften des Pentafluorethans und des Kohlendioxids darüber hinaus reduziert werden. So ist ein Kältemittelgemisch mit Pentafluorethan und Difluormethan als nicht brennbar einzustufen. Gleichzeitig weist Difluormethan mit Kohlendioxid eine tiefere Gefriertemperatur auf als mit Pentafluorethan. Folglich kann mit einem Gemisch aus Pentafluorethan, Difluormethan und Kohlendioxid eine geringere Gefriertemperatur als mit Pentafluorethan und Kohlendioxid alleine erreicht werden. Difluormethan senkt damit den Gefrierpunkt des Kältemittelgemisches signifikant ab, wobei ein bestimmter Masseanteil an Kohlendioxid erforderlich ist, damit das Kältemittelgemisch nicht brennbar ist. Gleichzeitig erzeugt Difluormethan jedoch eine hohe Verdichtungsendtemperatur, weshalb Difluormethan als alleiniger Mischungspartner für Kohlendioxid nur eingeschränkt geeignet ist. Pentafluorethan kann einen Gefrierpunkt des Kältemittelgemisches nicht so weit absenken wie Difluormethan, hat aber eine im Vergleich zu Kohlendioxid höhere flammhemmende Wirkung, was vorteilhaft ist.

In einer Ausführungsform des Kältemittels kann ein Masseanteil an Kohlendioxid 31 Masseprozent und ein Masseanteil Pentafluorethan 69 Masseprozent betragen. So ist es dann möglich ein Kältemittelgemisch alleine bestehend aus Kohlendioxid und Pentafluorethan herzustellen. Pentofluorethan ist nicht brennbar, so dass auch alle Gemische mit ihm und Kohlendioxid nicht brennbar sind. Die Gefrierpunktsreduktion ist verglichen mit Difluormethan und R1123 weniger stark ausgeprägt. Sein GWP ist mit 3150 deutlich höher als der anderer möglicher Komponenten. Es kann daher auch durch andere Stoffe partiell im Kältemittelgemisch substituiert werden um den GWP des Kältemittelgemisches zu reduzieren. Die brandhemmende Wirkung von Pentofluorethan ist stärker als die von Kohlendioxid, so dass ein Masseanteil an Kohlendioxid im Kältemittelgemisch reduziert werden kann was den Gefrierpunkt weiter senkt, die nicht Brennbarkeit weiterhin gewährleistet aber den GWP erhöht. Es sind somit auch Gemische aus Kohlendioxid, Pentofluorethan und R1132A, R1123 und R1141 möglich.

Bereits mit einem Masseanteil Kohlendioxid von mind. 35 Masseprozent kann das Kältemittelgemisch als nicht brennbar eingestuft werden. Die Gefrierpunktreduktion ist gegenüber R125, R1132A und R1141 größer, weshalb eine Reduktion des Gefrierpunktes ermöglicht werden kann. Ein GWP von Difluormethan ist aber größer als der von R1 132A, R1141, R1123 und Kohlendioxid. Difluormethan kann als kleines Molekül bezeichnet werden, was dazu führt das bei der Verdichtung von Difluormethan im Vergleich zu größeren und schwereren Molekülen wie Pentofluorethan die Verdichtungsendtemperatur bei gleichen technischen Randbedinungen höher liegt. Die Kältemittel R410A und R410B zeigen niedrigerer Verdichtungsendtemperaturen als Difluormethan, weswegen sie sich insbesondere als Gemischpartner mit Kohlendioxid anbieten.

Folglich kann das Kältemittelgemisch als ein binäres Gemisch ausgebildet sein.

Das Kältemittelgemisch kann als eine zusätzliche Komponente Trifluorethylen, 1,1-Difluorethen oder Fluorethen aufweisen. 1,1-Difluorethen hat einen sehr geringen GWP, so dass es als Komponente zur Reduktion des GWP eignet. Es hat weiterhin einen sehr geringen Gefrier- und Normalsiedepunkt was es für Tieftemperaturanwendungen verwendbar macht. 1,1-Difluorethen und Fluorethen sind jedoch brennbar und sollten bei einer Beimischung nicht mehr als 10 m% im Kältemittelgemisch betragen. Trifluorethylen hat einen sehr geringen GWP, so dass es als Komponente zur Reduktion des GWP eignet. Da es thermodynamisch ähnlich Difluormethan ist, können Kältemittelgemische aus Kohlendioxid, Difluormethan und Trifluorethylen ausgebildet werden. Trifluorethylen, kann, ähnlich wie Difluormethan, zu einer starken Reduktion des Gefrierpunktes (stärker als bei Pentafluorethan) führen. Masseanteile von Trifluorethylen zu Difluormethan können vorzugsweise 45/55 betragen.

In der nachfolgenden Tabelle ist mit dem Beispiel 1 ein Kältemittel entsprechend den zuvor beschriebenen Ausführungsformen angegeben.

**Tabelle**

| Kältemittel | 1 | 2 | 3 | 4 |
|---|---|---|---|---|
| R744 (Gew.-%) | 31 | 45,8 | 35 | 35 |
| R125 (Gew.-%) | 69 | | | 32,5 |
| R32 (Gew.-%) | | 54,2 | | 32,5 |
| R410A (Gew.-%) | | | 65 | |
| Temperaturglide Absolut (K) | 17,1 | 15,9 | 15,7 | 15,7 |
| Temperaturglide (°C) | -77,7 bis -60,6 | -78,7 bis -62,8 | -77 bis -61,3 | -77 bis -61,3 |
| Gefrierpunkt (°C) | -80 | -87 | -86 | -86 |

Weiter kann das Kältemittel einen Temperaturglide von ≥ 10 K, bevorzugt ≥ 15 K, besonders bevorzugt ≥ 18 K aufweisen. Ein Temperaturglide des Kältemittels sollte dabei nicht > 20 K sein, damit eine Kühleinrichtung sinnvoll betrieben werden kann.

Das Kältemittel kann ein relatives CO2-Äquivalent, bezogen auf 20 Jahre, von < 2500, bevorzugt < 1500, besonders bevorzugt < 500, aufweisen. Folglich kann das Kältemittel wenig umweltschädigend sein.

Das Kältemittel kann nicht brennbar sein. Wenn das Kältemittel nicht brennbar ist, wird es möglich, den Kühlkreislauf und insbesondere eine Prüfkammer kostengünstiger auszubilden, da keine besonderen Sicherheitsvorkehrungen hinsichtlich Brennbarkeit des Kältemittels zu beachten sind. Das Kältemittel kann dann zumindest nicht der Brandklasse C und/oder der Kältemittelsicherheitsgruppe A1 zugeordnet werden. Darüber hinaus wird ein Versand beziehungsweise ein Transport des Kühlkreislaufs vereinfacht, da der Kühlkreislauf bereits vor einem Transport, unabhängig von der Transportart mit dem Kältemittel befüllt werden kann. Bei brennbarem Kältemittel ist gegebenenfalls erst eine Befüllung im Rahmen einer Inbetriebnahme am Aufstellort möglich. Weiter ist eine Verwendung des nicht brennbaren Kältemittels bei vorhandenen Zündquellen möglich.

Mittels der Temperiervorrichtung kann eine Temperatur in einem Temperaturbereich von -60°C bis +180°C, bevorzugt -80°C bis +180°C, besonders bevorzugt -100°C bis +180°C, innerhalb des Prüfraums ausgebildet werden. Im Gegensatz zu einer Gemischkaskadenanlage kann hier das Kältemittel mit allen im Kältemittel enthaltenen Stoffkomponenten gleichzeitig über das Expansionsorgan verdampft werden. Da ein Gefrierpunkt des Kohlendioxids bei -56,6 °C liegt, sind Kältemittelgemische, die einen großen Masseanteil an Kohlendioxid enthalten, prinzipiell nicht mehr zur Erzielung von Temperaturen unter -56,6 °C geeignet. Durch die Verwendung des erfindungsgemäßen Kältemittels wird es jedoch möglich, eine Taupunkttemperatur des Kältemittels von unter - 60°C zu erzielen.

Der Kühlkreislauf kann einen internen Wärmeübertrager aufweisen, wobei der interne Wärmeübertrager an einer Hochdruckseite des Kühlkreislaufs in einer Strömungsrichtung vor dem Expansionsorgan und nachfolgend dem Kondensator, und an einer Niederdruckseite des Kühlkreislaufs in einer Strömungsrichtung vor dem Verdichter und nachfolgend dem Wärmeübertrager angeschlossen sein kann. Durch den Einsatz des internen Wärmetauschers und die damit durchgeführte Kühlung des verflüssigten Kältemittels der Hochdruckseite können Temperaturen unter -56 °C leicht erreicht werden. Dabei kann die Verdampfungstemperatur des mittels des internen Wärmeübertragers gekühlten Kältemittels am Expansionsorgan relativ zu einer Verdampfungstemperatur eines ungekühlten Kältemittels abgesenkt werden. Die über den internen Wärmetauscher von der Niederdruckseite auf die Hochdruckseite übertragene Kälteleistung kann somit zumindest teilweise, bevorzugt ausschließlich zur Absenkung der Verdampfungstemperatur des Kältemittels am Expansionsorgan genutzt werden. Weiter wird es überhaupt erst möglich, ein zeotropes Kältemittel mit einem Temperaturglide zu verwenden, da dann der Ort der Taupunkttemperatur des Kältemittels beziehungsweise der Taupunkt des Kältemittels in den internen Wärmeübertrager verschoben werden kann. Infolge des Temperaturglides des zeotropen Kältemittels kann die erzielte Taupunkttemperatur des Kältemittels vergleichsweise hoch sein und so eine weitergehende Abkühlung des Wärmeübertragers verhindern.

Es kann daher nur ein Teil des Kältemittels in dem Wärmeübertrager verdampft und der nicht nutzbare Teil des Nassdampfanteils des Kältemittels in den internen Wärmeübertrager verlagert werden. Insgesamt wird es so möglich, auch Kältemittel mit einem Masseanteil an Kohlendioxid, die einerseits umweltfreundlich sind aber andererseits zeotrope Eigenschaften aufweisen, zur Ausbildung niedriger Temperaturen in einem Prüfraum zu verwenden. Wenn ein Teil des Temperaturglides beziehungsweise ein Teil des Nassdampfes des Kältemittels von dem Wärmeübertrager im Prüfraum in den internen Wärmeübertrager verlagert wird, wird es darüber hinaus möglich, mit dem zeotropen Kältemittel eine vergleichsweise verbesserte Temperaturkonstanz zu erzielen. Eine über den Wärmeübertrager abgegebene Kälteleistung kann dann nur innerhalb eines Abschnitts des Temperaturglides erzeugt werden, so dass eine Verschiebung des Taupunktes des Kältemittels im Kühlkreislauf kaum eine Temperaturkonstanz des Wärmeübertragers beeinflussen kann. Weiter kann vorgesehen sein, dass hier lediglich ein einziger Wärmetauscher zur Kühlung eines Mediums, hier der Luft im Prüfraum, verwendet wird.

Der Wärmeübertrager kann derart dimensioniert ausgebildet sein, dass das Kältemittel nur teilweise in dem Wärmeübertrager verdampfen kann. Hieraus ergibt sich der Vorteil, dass der Taupunkt beziehungsweise der Ort der Taupunkttemperatur des Kältemittels aus dem Wärmeübertrager heraus, in den internen Wärmeübertrager verschoben werden kann. Aufgrund eines Temperaturglides des zeotropen Kältemittels wird bei dem teilweisen Verdampfen des Kältemittels in dem Wärmeübertrager eine niedrigere Temperatur im Wärmeübertrager erzielt, als bei dem nachfolgenden, restlichen Verdampfen des Kältemittels in dem internen Wärmeübertrager.

In einer Ausführungsform der Prüfkammer kann der Wärmeübertrager in dem Prüfraum angeordnet sein. Auch kann der Wärmeübertrager dann in einem Luftbehandlungsraum des Prüfraums angeordnet sein, so dass von einem Lüfter umgewälzte Luft mit einem Wärmeübertrager in Kontakt gelangen kann. So wird es möglich eine umgewälzte Luftmenge des Prüfraums mittels der Kühleinrichtung über den Wärmeübertrager im Prüfraum direkt abzukühlen. Die Prüfkammer kann dann den Kühlkreislauf als einen alleinigen, einzigen Kühlkreislauf aufweisen. Der Kühlkreislauf ist dann direkt an den Prüfraum angeschlossen.

In einer weiteren Ausführungsform der Prüfkammer kann der Kondensator als ein Kaskaden-Wärmeübertrager eines weiteren Kühlkreislaufs der Kühleinrichtung ausgebildet sein. Demnach kann die Prüfkammer dann zumindest zwei Kühlkreisläufe aufweisen, wobei der Kühlkreislauf eine zweite Stufe der Kühleinrichtung und ein weiterer Kühlkreislauf, der dann dem Kühlkreislauf vorgelagert ist, eine erste Stufe der Kühleinrichtung ausbilden kann. Der Kondensator dient dann als ein Kaskaden-Wärmeübertrager beziehungsweise Wärmeübertrager für den Kühlkreislauf. Bei dieser Ausführungsform einer Prüfkammer wird es möglich, besonders niedrige Temperaturen in dem Prüfraum auszubilden.

Die Temperiervorrichtung kann eine Heizeinrichtung mit einer Heizung und einem Heiz-Wärmeübertrager in dem Prüfraum aufweisen. Die Heizeinrichtung kann beispielsweise eine elektrische Widerstandsheizung sein, die den Heiz-Wärmeübertrager beheizt, derart, dass über den Heiz-Wärmeübertrager eine Temperaturerhöhung in dem Prüfraum ermöglicht wird. Wenn der Wärmeübertrager und der Heiz-Wärmeübertrager mittels einer Regeleinrichtung zur Kühlung oder Wärmung der im Prüfung umgewälzten Luft gezielt gesteuert werden können, kann mittels der Temperiervorrichtung innerhalb des Prüfraums eine Temperatur in dem vorstehend angegebenen Temperaturbereich ausgebildet werden. Dabei kann unabhängig vom Prüfgut beziehungsweise eines Betriebszustandes des Prüfgutes eine zeitliche Temperaturkonstanz von ±1 K, vorzugsweise ±0,3 K bis ±0,5 K oder kleiner ±0,3 K während eines Prüfintervalls in dem Prüfraum ausgebildet werden. Unter einem Prüfintervall wird je ein Zeitabschnitt eines vollständigen Prüfzeitraums verstanden, in dem das Prüfgut einer im Wesentlichen gleichbleibenden Temperatur oder Klimabedingung ausgesetzt wird. Der Heiz-Wärmeübertrager kann zusammen mit dem Wärmeübertrager des Kühlkreislaufs derart kombiniert sein, dass ein gemeinsamer Wärmeübertragerkörper ausgebildet ist, der vom Kältemittel durchströmbar ist und der Heizelemente einer elektrischen Widerstandsheizung aufweist. Der Kondensator kann mit einer Luftkühlung oder Wasserkühlung oder einer anderen Kühlflüssigkeit ausgebildet sein. Prinzipiell kann der Kondensator mit jedem geeigneten Fluid gekühlt werden. Wesentlich ist, dass die am Kondensator anfallende Wärmelast über die Luftkühlung oder Wasserkühlung so abgeführt wird, dass das Kältemittel so kondensieren kann, dass es vollständig verflüssigt ist.

Im Kühlkreislauf kann ein erster Bypass mit zumindest einem regelbaren zweiten Expansionsorgan ausgebildet sein, wobei der erste Bypass in einer Strömungsrichtung vor dem internen Wärmeübertrager und nachfolgend dem Kondensator an den Kühlkreislauf angeschlossen sein kann, wobei der erste Bypass als regelbare interne Ergänzungskühlung ausgebildet sein kann. Der erste Bypass kann so eine Rückeinspritzeinrichtung für Kältemittel ausbilden. Demnach kann von dem regelbaren zweiten Expansionsorgan im internen Wärmeübertrager auf der Niederdruckseite Kältemittel zugeführt werden. Der erste Bypass kann dann an der Niederdruckseite des Kühlkreislaufs in einer Strömungsrichtung vor dem internen Wärmeübertrager und nachfolgend dem Wärmeübertrager angeschlossen sein. Das durch das zweite Expansionsorgan gekühlte beziehungsweise seinem Temperaturniveau abgesenkte Kältemittel kann dann durch den internen Wärmeübertrager hindurch geleitet werden und eine Kühlung des Kältemittels auf der Hochdruckseite des internen Wärmeübertragers verstärken. Auch wird eine Kühlleistung des internen Wärmeübertragers dadurch noch genauer regelbar.

In dem Kühlkreislauf kann ein zweiter Bypass mit zumindest einem dritten Expansionsorgan ausgebildet sein, wobei der zweite Bypass das Expansionsorgan in Strömungsrichtung nachfolgend dem Kondensator und vor dem internen Wärmeübertrager überbrückt, wobei über das dritte Expansionsorgan das Kältemittel so dosierbar ist, dass eine Sauggastemperatur und/oder ein Sauggasdruck des Kältemittels auf der Niederdruckseite des Kühlkreislaufs vor dem Verdichter geregelt werden kann. Dadurch kann unter anderem verhindert werden, dass der Verdichter, bei dem es sich beispielsweise um einen Kompressor handeln kann, eventuell überhitzt dann beschädigt wird. Folglich kann über den zweiten Bypass durch Betätigung des dritten Expansionsorgans vor dem Verdichter befindliches gasförmiges Kältemittel durch Zudosieren von noch flüssigem Kältemittel gekühlt werden. Eine Betätigung des dritten Expansionsorgans kann durch eine Steuervorrichtung erfolgen, die ihrerseits mit einem Druck- und/oder Temperatursensor in einem Kühlkreislauf vor dem Verdichter gekoppelt ist. Besonders vorteilhaft ist es, wenn über den zweiten Bypass eine Sauggastemperatur von ≤ 30 °C eingestellt werden kann. Auch kann das Kältemittel so dosiert werden, dass eine Betriebsdauer des Verdichters regelbar ist. Prinzipiell ist es nachteilig, wenn der Verdichter beziehungsweise Kompressor vielfach eingeschaltet und ausgeschaltet wird. Eine Lebensdauer eines Kompressors kann verlängert werden, wenn dieser längere Zeitabschnitte in Betrieb ist. Über den zweiten Bypass kann ein Kältemittel an dem Expansionsorgan oder dem Kondensator vorbeigeführt werden, um beispielsweise ein automatisches Abschalten des Kompressors zu verzögern und eine Betriebsdauer des Kompressors zu verlängern.

In dem Kühlkreislauf kann ein weiterer Bypass mit zumindest einem weiteren Expansionsorgan ausgebildet sein, wobei der weitere Bypass den Verdichter in Strömungsrichtung nachfolgend dem Verdichter und vor dem Kondensator überbrückt, derart, dass eine Sauggastemperatur und/oder ein Sauggasdruck des Kältemittels auf der Niederdruckseite des Kühlkreislaufs vor dem Verdichter regelbar sein kann, und/oder dass eine Druckdifferenz zwischen der Hochdruckseite und einer Niederdruckseite des Kühlkreislaufs ausgeglichen werden kann. Der zweite Bypass kann ergänzend mit einem einstellbaren oder regelbaren Ventil, beispielsweise einem Magnetventil ausgestattet sein. Durch die Verbindung von Hochdruckseite und Niederdruckseite über das weitere Expansionsorgan kann sichergestellt werden, dass bei einem Anlagenstillstand das so verdichtete und gasförmige Kältemittel von der Hochdruckseite allmählich auf die Niederdruckseite des Kühlkreislaufs strömt. So wird auch bei geschlossenem Expansionsorgan sichergestellt, dass ein allmählicher Druckausgleich zwischen der Hochdruckseite und der Niederdruckseite erfolgt. Ein Querschnitt des weiteren Expansionsorgans kann dabei so bemessen sein, dass ein Überströmen des Kältemittels von der Hochdruckseite zu der Niederdruckseite einen normalen Betrieb der Kühleinrichtung nur unwesentlich beeinflusst. Gleichwohl kann vorgesehen sein, dass vor dem Verdichter befindliches gasförmiges Kältemittel durch Zudosieren von dem flüssigen Kältemittel über den weiteren Bypass gekühlt wird.

Der interne Wärmeübertrager kann weiter als eine Unterkühlstrecke oder ein Wärmetauscher, insbesondere Plattenwärmetauscher, ausgebildet sein. Die Unterkühlstrecke kann bereits durch zwei aneinander anliegende Leitungsabschnitte des Kühlkreislaufs ausgebildet sein.

Das Expansionsorgan kann ein Drosselorgan und ein Magnetventil aufweisen, wobei über das Drosselorgan und das Magnetventil Kältemittel dosiert werden kann. Das Drosselorgan kann ein einstellbares Ventil oder eine Kapillare sein, über das dann mittels des Magnetventils Kältemittel geleitet wird. Das Magnetventil kann seinerseits mittels einer Regeleinrichtung betätigt werden.

Auch kann die Temperiervorrichtung eine Regeleinrichtung mit zumindest einem Drucksensor und/oder zumindest einem Temperatursensor in dem Kühlkreislauf umfassen, wobei ein Magnetventil mittels der Regeleinrichtung in Abhängigkeit von einer gemessen Temperatur beziehungsweise eines Drucks betätigt werden kann. Die Regeleinrichtung kann Mittel zur Datenverarbeitung umfassen, die Datensätze von Sensoren verarbeiten und die Magnetventile ansteuern. Eine Regelung einer Funktion der Kühleinrichtung kann dann auch, beispielsweise über ein entsprechendes Computerprogramm, an das verwendete Kältemittel angepasst sein. Weiter kann die Regeleinrichtung eine Betriebsstörung signalisieren und gegebenenfalls eine Abschaltung der Prüfkammer veranlassen, um die Prüfkammer und das Prüfgut vor einer Beschädigung durch kritische oder unerwünschte Betriebszustände der Prüfkammer zu schützen.

Bei der erfindungsgemäßen Verwendung eines Kältemittels, bestehend aus einem Kältemittelgemisch aus einem Masseanteil Kohlendioxid von 30 bis 33 Masseprozent und einem Masseanteil mindestens einer weiteren Komponente, wobei die weitere Komponente Pentafluorethan ist, wobei der Masseanteil Pentafluorethan 67 bis 70 Masseprozent beträgt, wird das Kältemittel zur Konditionierung von Luft in einem gegenüber einer Umgebung verschließbaren und temperaturisolierten Prüfraum einer Prüfkammer zur Aufnahme von Prüfgut verwendet, wobei mittels einer Kühleinrichtung einer Temperiervorrichtung der Prüfkammer, mit einem Kühlkreislauf mit dem Kältemittel, einem Wärmeübertrager, einem Verdichter, einem Kondensator und einem Expansionsorgan, eine Temperatur in einem Temperaturbereich von -60 °C bis +180 °C, bevorzugt - 70 °C bis +180 °C, besonders bevorzugt -80 °C bis +180 °C, innerhalb des Prüfraums ausgebildet wird.

Das Kältemittel kann mittels eines internen Wärmeübertragers des Kühlkreislaufs, angeschlossen an einer Hochdruckseite des Kühlkreislaufs in einer Strömungsrichtung vor dem Expansionsorgan und nachfolgend dem Kondensator, und an einer Niederdruckseite des Kühlkreislaufs in einer Strömungsrichtung vor dem Verdichter und nachfolgend dem Wärmeübertrager, der Hochdruckseite gekühlt werden, wobei die Kühlung des Kältemittels der Hochdruckseite mittels des internen Wärmeübertragers zur Absenkung einer Verdampfungstemperatur am Expansionsorgan genutzt werden kann. Während der Absenkung der Verdampfungstemperatur des Kältemittels der Hochdruckseite kann ein Saugdruck des Kältemittels der Niederdruckseite konstant gehalten werden. Ein größerer anlagentechnischer Aufwand, beispielsweise eine ergänzende Regelung des Saugdrucks, wie auch über eine Regelung des Expansionsorgans in Abhängigkeit des Saugdrucks, ist dann nicht zwingend erforderlich. Insbesondere kann der Verdichter dann auch mit einer konstanten Leistung, unabhängig von einem Betriebszustand des Kühlkreislaufs, betrieben werden. Gerade bei einer Verwendung von Kolbenpumpen als Verdichter ist es wesentlich, dass diese zur Erzielung einer langen Lebensdauer über lange Zeiträume und konstanter Drehzahl im Einsatz sind.

Das Kältemittel der Hochdruckseite kann von dem Kältemittel der Niederdruckseite bei einem konstanten Saugdruck auf der Niederdruckseite mittels des internen Wärmeübertragers gekühlt werden. Folglich kann das Kältemittel kann auf einer Verdampfungsstrecke des Kühlkreislaufs von dem Expansionsorgan bis einschließlich dem internen Wärmeübertrager bei einem konstanten Saugdruck verdampfen. Bei dem konstanten Saugdruck beziehungsweise Verdampfungsdruck des Kältemittels kann dann das Kältemittel von dem Expansionsorgan mit einer niedrigen Verdampfungstemperatur bis hin zu dem internen Wärmeübertrager mit einer hohen Verdampfungstemperatur entsprechend dem Temperaturglide des Kältemittels verdampfen. Die durch den Temperaturglide sich ergebende Taupunkttemperatur kann dabei über der Temperatur des zu kühlenden Mediums beziehungsweise der Luft in dem Prüfraum liegen. Sobald eine Verdampfungstemperatur des Kältemittels bei gleichem Saugdruck der Temperatur der zu kühlenden Luft in dem Prüfraum entspricht, kann keine weitere Abkühlung der Luft erzielt werden. Die Taupunkttemperatur, die im weiteren Wärmetauscher erreicht wird, liegt jedoch noch unter der Flüssigkeitstemperatur des Kältemittels auf der Hochdruckseite des internen Wärmeübertragers, so dass eine Flüssigkeitstemperatur des Kältemittels weiter reduziert werden kann. Demnach kann eine Verdampfungstemperatur nach dem Expansionsorgan ohne eine Veränderung des Saugdrucks abgesenkt und damit eine weitergehende Kühlung der Luft in dem Prüfraum erzielt werden.

So kann eine erste Teilmenge des über das Expansionsorgan geleiteten Kältemittels in dem Wärmeübertrager und eine zweite Teilmenge des Kältemittels in dem internen Wärmeübertrager verdampft werden. Eine Verdampfungsstrecke des Kühlkreislaufs, innerhalb dem das Kältemittel verdampft, kann sich von dem Expansionsorgan bis hin zu dem internen Wärmeübertrager erstrecken. Dabei kann die Verdampfungsstrecke durch den internen Wärmeübertrager verlaufen, wobei vorzugsweise ein Taupunkt des Kältemittels an einem Ausgang des internen Wärmeübertragers in Strömungsrichtung vor dem Verdichter liegen kann. Ein Verhältnis der ersten Teilmenge zu der zweiten Teilmenge kann sich während eines Betriebs des Kühlkreislaufs in Abhängigkeit einer Temperatur in dem Prüfraum beziehungsweise an dem Wärmeübertrager verändern. Beispielsweise kann sich bei einer vergleichsweise großen Temperaturdifferenz zwischen der Temperatur des Wärmeübertragers und einer Temperatur im Prüfraum eine beschleunigte Erwärmung des Kältemittels im Wärmeübertrager ergeben, die zu einer Verschiebung des Taupunkts des Kältemittels bis hin zu einem Eingang des internen Wärmeübertragers oder Ausgang des Wärmeübertragers in Strömungsrichtung vor dem Verdichter führt. Eine derartige Verschiebung des Taupunktes kann toleriert werden, so lange noch keine vergleichsweise niedrige Temperatur beziehungsweise Soll-Temperatur im Prüfraum ausgebildet ist. Nähert sich die Temperatur des Wärmetauschers der Temperatur im Prüfraum an, erfolgt eine Verschiebung des Taupunktes und damit eine Vergrößerung der zweiten Teilmenge relativ zur ersten Teilmenge des Kältemittels.

Die Absenkung der Verdampfungstemperatur des Kältemittels der Hochdruckseite kann selbstregelnd erfolgen. Je nach Temperatur am Wärmeübertrager kann nicht mehr verdampfendes Kältemittel aus diesem in Strömungsrichtung ausgeleitet werden, da in diesem Fall die Temperatur am Wärmeübertrager nicht mehr ausreicht um einen Phasenwechsel des Kältemittels zu erzeugen. So wird Nassdampf beziehungsweise flüssiges Kältemittel im internen Wärmeübertrager nachverdampft, da hier ein Temperaturunterschied zwischen der Hochdruckseite und der Niederdruckseite immer größer als am Wärmeübertrager sein kann. Wenn mittels des internen Wärmeübertragers eine Temperatur des flüssigen Kältemittels vor dem Expansionsorgan durch den Wärmeaustausch am internen Wärmeübertrager reduziert wird, erhöht sich die Energiedichte des Kältemittels vor dem Expansionsorgan und die damit erzielbare Temperaturdifferenz am Wärmeübertrager. Eine Regelung des Zusammenspiels von Expansionsorgan, Wärmeübertrager und internem Wärmeübertrager ist prinzipiell nicht erforderlich.

Besonders vorteilhaft ist es, wenn die Kühleinrichtung ausschließlich unterhalb des kritischen Punktes des Kältemittels betrieben wird. Wenn die Kühleinrichtung unterhalb des Tripelpunktes des Kältemittels betrieben wird, kann ein Erreichen eines überkritischen Zustands des Kältemittels ausgeschlossen werden. So ist es dann auch nicht erforderlich, die Kühleinrichtung für einen Betrieb im überkritischen Zustand auszubilden, wodurch Kosten zur Ausbildung der Kühleinrichtung eingespart werden können.

Der konstante Saugdruck kann insbesondere auch während einer Absenkung der Verdampfungstemperatur des Kältemittels der Hochdruckseite durch den internen Wärmeübertrager aufrechterhalten werden. Demnach ist die Kühlung des Kältemittels der Hochdruckseite über den internen Wärmeübertrager auch zumindest teilweise oder auch ausschließlich zur Absenkung einer Verdampfungstemperatur des Kältemittels am Expansionsorgan nutzbar.

Eine Taupunkttemperatur des Kältemittels kann höher sein als eine Minimaltemperatur des Temperaturbereichs. Bei den aus dem Stand der Technik bekannten Prüfkammern ist dann mit einem derartigen Kältemittel nicht mehr die Minimaltemperatur des Temperaturbereichs im Prüfraum ausbildbar, sondern eine vergleichsweise höhere Minimaltemperatur, die im wesentlichen der Taupunkttemperatur des Kältemittels entspricht. Bei der erfindungsgemäßen Prüfkammer kann jedoch ein Kältemittel verwendet werden, dessen Taupunkttemperatur höher ist als eine erzielbare Minimaltemperatur des Temperaturbereichs, da das verflüssigte Kältemittel auf der Hochdruckseite mittels des internen Wärmeübertragers gekühlt werden kann, sodass eine Verdampfungstemperatur des Kältemittels am Expansionsorgan vergleichsweise geringer sein kann.

Das Kältemittel kann bei einem Saugdruck beziehungsweise Verdampfungsdruck in einem Druckbereich von 0,3 bis 5 bar absolut verdampft werden. Der Einsatz des Kältemittels innerhalb dieses Druckbereichs ermöglicht eine kostengünstige Ausbildung des Kühlkreislaufs, da dann keine besonderen, druckstabilen Baugruppen und Komponenten zur Ausbildung der Niederdruckseite des Kühlkreislaufs erforderlich sind.

Auch kann das Kältemittel bei einem Kondensationsdruck in einem Druckbereich von 5 bis 35 bar absolut kondensiert werden. Auch hier kann die Hochdruckseite dann mit Baugruppen und Komponenten ausgebildet werden, die nicht an vergleichsweise höhere Drücke angepasst sein müssen.

Weitere Ausführungsformen einer Verwendung ergeben sich aus den Merkmalsbeschreibungen der auf den Vorrichtungsanspruch 1 rückbezogenen Unteransprüche.

Nachfolgend werden bevorzugte Ausführungsformen der Erfindung unter Bezugnahme auf die beigefügten Zeichnungen näher erläutert.

Es zeigen:
- **Fig. 1**: ein Druck-Enthalpie-Diagramm für ein Kältemittel;
- **Fig. 2**: eine schematische Darstellung einer ersten Ausführungsform einer Kühleinrichtung;
- **Fig. 3**: eine schematische Darstellung einer zweiten Ausführungsform einer Kühleinrichtung;
- **Fig. 4**: eine schematische Darstellung einer dritten Ausführungsform einer Kühleinrichtung;
- **Fig. 5**: eine schematische Darstellung einer vierten Ausführungsform einer Kühleinrichtung;
- **Fig. 6**: eine schematische Darstellung einer fünften Ausführungsform einer Kühleinrichtung.

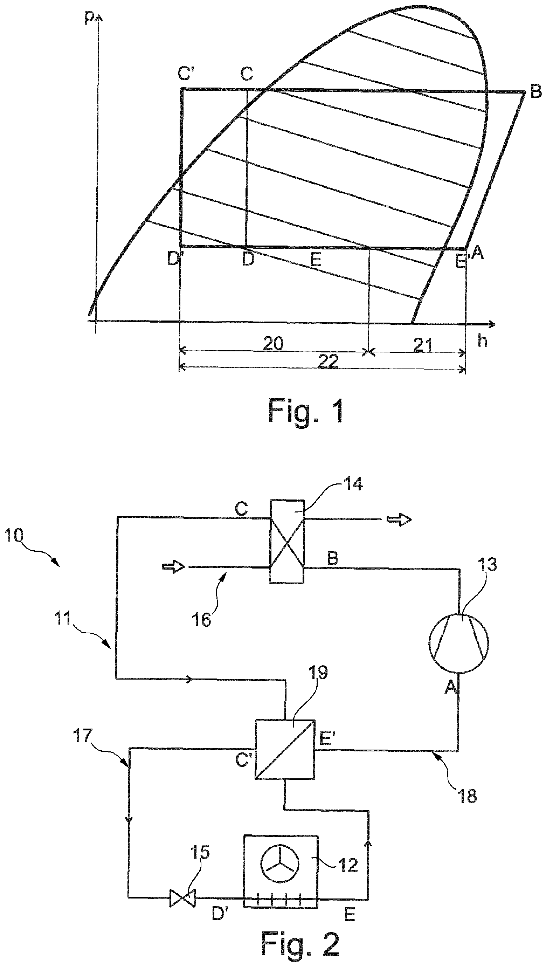

Die **Fig. 2** zeigt eine erste Ausführungsform einer Kühleinrichtung 10 einer hier nicht näher dargestellten Prüfkammer. Die Kühleinrichtung 10 umfasst einen Kühlkreislauf 11 mit einem Kältemittel, einem Wärmeübertrager 12, einem Verdichter 13 und einem Kondensator 14 sowie einem Expansionsorgan 15. Der Kondensator 14 wird hier durch einen weiteren Kühlkreislauf 16 gekühlt. Der Wärmeübertrager 12 ist in einem hier nicht dargestellten Prüfraum der Prüfkammer angeordnet. Weiter weist der Kühlkreislauf 11 eine Hochdruckseite 17 und eine Niederdruckseite 18 auf, an die ein interner Wärmeübertrager 19 angeschlossen ist.

Die **Fig. 1** zeigt ein Druck-Enthalpie-Diagramm (log p/h-Diagramm) für das im Kühlkreislauf 11 zirkulierende Kältemittel, bei dem es sich um ein zeotropes Kältemittel handelt. Ausgehend von der Position A wird nach einer Zusammenschau der **Fig. 1** und **2** das Kältemittel vor dem Verdichter 13 angesaugt und komprimiert, sodass ein Druck entsprechend der Position B in Strömungsrichtung nach dem Verdichter 13 erzielt wird. Das Kältemittel wird mittels des Verdichters 13 verdichtet und entsprechend der Position C nachfolgend im Kondensator 14 verflüssigt. Das Kältemittel durchläuft den internen Wärmeübertrager 19 auf der Hochdruckseite 17 und wird in diesem weiter abgekühlt, sodass die Position C' in Strömungsrichtung vor dem Expansionsorgan 15 erreicht wird. Mithilfe des internen Wärmeübertragers 19 kann der im Wärmeübertrager 12 nicht nutzbare Teil des Nassdampfgebietes (Positionen E bis E') zur weiteren Reduzierung einer Temperatur des Kältemittels (Positionen C' bis C) genutzt werden. An dem Expansionsorgan 15 erfolgt eine Entspannung des Kältemittels (Positionen C' bis D') und eine teilweise Verflüssigung in dem Wärmeübertrager 12 (Positionen D' bis E). Danach gelangt der Nassdampf des Kältemittels in den internen Wärmeübertrager 19 auf der Niederdruckseite 18, wobei hier eine Nachverdampfung des Kältemittels bis zur Taupunkttemperatur beziehungsweise dem Taupunkt des Kältemittels bei der Position E' erfolgt. Eine erste Teilstrecke 20 einer Verdampfungsstrecke 22 des Kältemittels verläuft daher durch den Wärmeübertrager 12, wobei eine zweite Teilstrecke 21 der Verdampfungsstrecke 22 durch den internen Wärmeübertrager 19 verläuft. Wesentlich ist hier, dass auf der Verdampfungsstrecke 22 ein Saugdruck des Verdichters 13 auf der Niederdruckseite 18 auch bei einer Änderung der Verdampfungstemperatur am Expansionsorgan 15 konstant gehalten wird.

Bei dem Kältemittel handelt es sich um ein Kältemittelgemisch aus einem Masseanteil Kohlendioxid von 30 bis 33 Masseprozent und einem Masseanteil mindestens einer weiteren Komponente, wobei die weitere Komponente Pentafluorethan mit 67 bis 70 Masseprozent ist. Prinzipiell ist es möglich, in dem Kühlkreislauf 11 und den nachfolgend beschriebenen Kühlkreisläufen das in der vorstehenden Tabelle aufgeführte Kältemittel 1 zu verwenden.

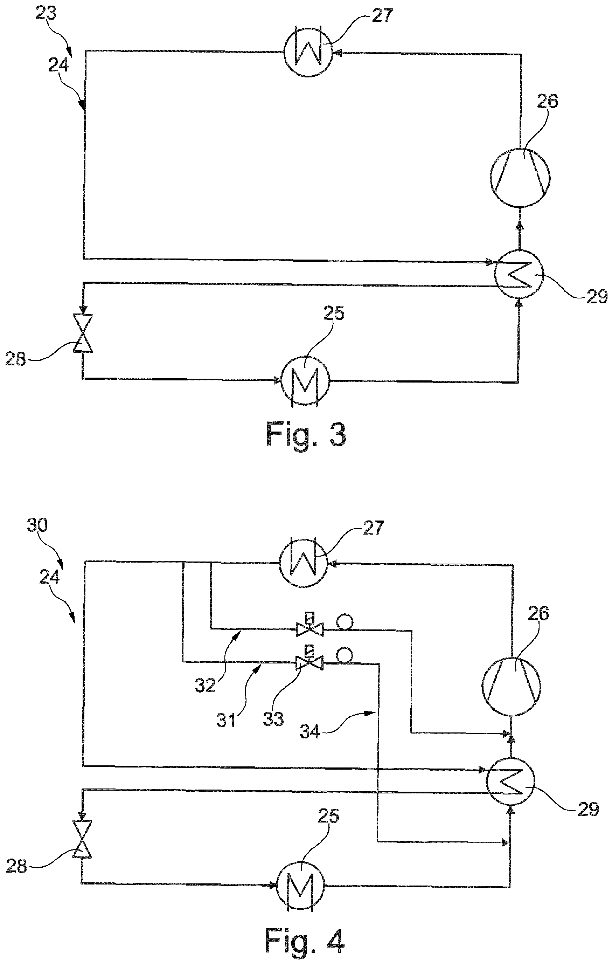

Die **Fig. 3** zeigt eine schematische Darstellung einer einfachsten Ausführungsform einer Kühleinrichtung 23, wobei die Kühleinrichtung 23 selbstregelnd ausgebildet ist. Die Kühleinrichtung umfasst einen Kühlkreislauf 24 mit einem Wärmeübertrager 25, einem Verdichter 26, einem Kondensator 27, einem Expansionsorgan 28 und einem internen Wärmeübertrager 29. Je nach einer Temperatur am Wärmeübertrager 25 entweicht nicht vollständiges verdampftes Kältemittel aus dem Wärmeübertrager 25, da die Temperatur am Wärmeübertrager 25 beziehungsweise in einem hier nicht gezeigten Prüfraum nicht mehr ausreicht, um einen Phasenwechsel zu erzeugen. In diesem Fall wird noch flüssiges Kältemittel im internen Wärmeübertrager 29 nachverdampft, da hier ein Temperaturunterschied immer größer als am Wärmeübertrager 25 sein muss. Sobald die Temperatur des flüssigen Kältemittels vor dem Expansionsorgan 28 durch den Wärmeaustausch im internen Wärmeübertrager 29 reduziert wurde, erhöht sich die Energiedichte und die damit erzielbare Temperaturdifferenz am Wärmeübertrager 25. Bei der Kühleinrichtung 23 ist eine aufwendige Regelung mit Sensoren etc. nicht erforderlich.

Die **Fig. 4** zeigt eine Kühleinrichtung 30, die im Unterschied zur Kühleinrichtung aus **Fig. 3** mit einem ersten Bypass 31 und einem zweiten Bypass 32 ausgebildet ist. In dem ersten Bypass 31 ist ein regelbares zweites Expansionsorgan 33 angeordnet, wobei der erste Bypass 31 als interne Ergänzungskühlung 34 ausgebildet ist. Der erste Bypass 31 ist unmittelbar in Strömungsrichtung nachfolgend dem Kondensator 27 vor dem internen Wärmetauscher 29 sowie in Strömungsrichtung nach dem Wärmeübertrager 25 und vor dem internen Wärmeübertrager 29 an den Kühlkreislauf 24 angeschlossen. Der erste Bypass 31 überbrückt somit das Expansionsorgan 28 mit dem Wärmeübertrager 25, wobei über das zweite Expansionsorgan 33 dem internen Wärmeübertrager 29 verdampfendes Kältemittel zugeführt werden kann. Ein Sauggasmassenstrom, der in den internen Wärmeübertrager 29 geleitet wird, kann mithilfe des ersten Bypass 31 bei hohen Sauggastemperaturen, welche durch den Wärmeübertrager 25 entstehen können, zusätzlich gekühlt werden. Somit kann sichergestellt werden, dass es zu keiner Verdampfung von Kältemittel vor dem Expansionsorgan kommen kann. Mittels des ersten Bypass 31 ist es daher möglich, auf wechselnde Lastfälle der Kühleinrichtung 30 zu reagieren. Der zweite Bypass 32 weist ein drittes Expansionsorgan 35 auf und ist in Strömungsrichtung nachfolgend dem Kondensator 27 und vor dem internen Wärmeübertrager 29 sowie nachfolgend dem internen Wärmeübertrager 29 und vor dem Verdichter 26 an den Kühlkreislauf 24 angeschlossen. Dadurch wird es möglich einen Sauggasmassenstrom vor dem Verdichter 26 über den zweiten Bypass 32 soweit zu reduzieren, dass unzulässig hohe Verdichtungsendtemperaturen vermieden werden.

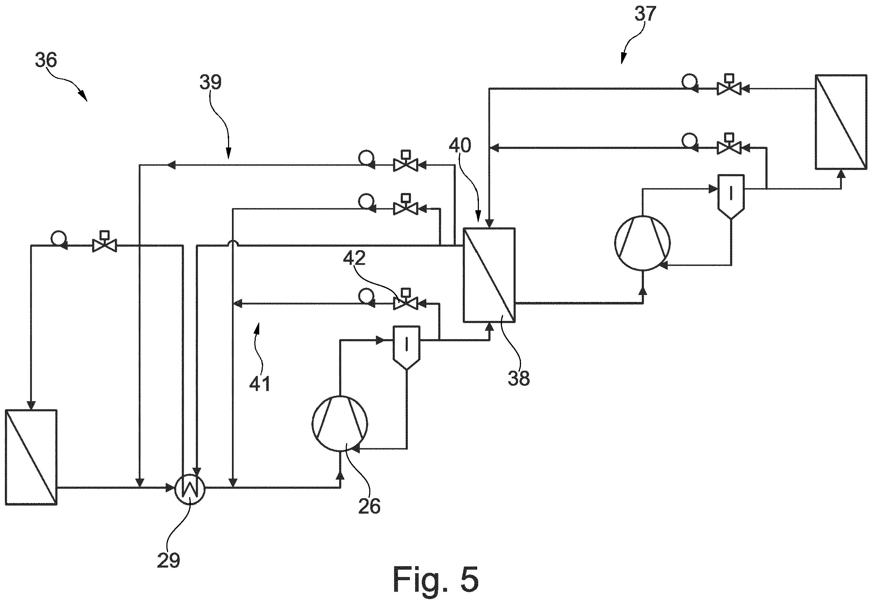

Die **Fig. 5** zeigt eine Kühleinrichtung 36, die im Unterschied zur Kühleinrichtung aus **Fig. 4** einen weiteren Kühlkreislauf 37 aufweist. Der weitere Kühlkreislauf 37 dient zur Kühlung eines Kondensators 38 eines Kühlkreislaufs 39. Der Kondensator 38 ist hier als ein Kaskaden-Wärmeübertrager 40 ausgebildet. Weiter weist der Kühlkreislauf 39 noch einen weiteren Bypass 41 mit einem weiteren Expansionsorgan 42 auf. Der weitere Bypass 41 ist in Strömungsrichtung des Kühlkreislaufs 39 nachfolgend dem Verdichter 26 und vor dem Kondensator 38 sowie nachfolgend dem internen Wärmeübertrager 29 und vor dem Verdichter 26 an den Kühlkreislauf 39 angeschlossen. Über den weiteren Bypass 41 kann somit noch nicht verflüssigtes, aber verdichtetes Kältemittel zurück, vor den Verdichter 26 strömen, wodurch eine Sauggastemperatur und/oder ein Sauggasdruck des Kältemittels geregelt werden kann.

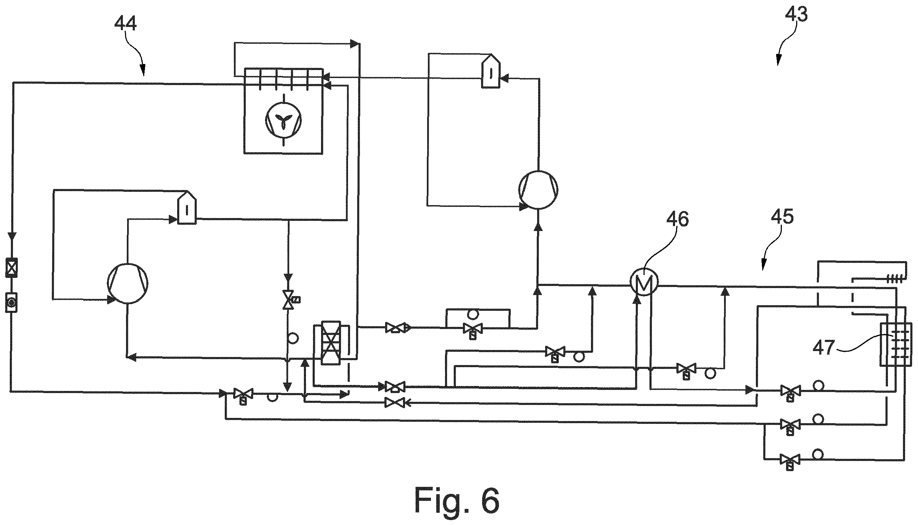

Die **Fig. 6** zeigt eine Kühleinrichtung 30 mit einem Kühlkreislauf 44 und einem weiteren Kühlkreislauf 45 und insbesondere einem internen Wärmeübertrager 46 in dem Kühlkreislauf 44. Ein Wärmeübertrager 47 ist hier in einem nicht dargestellten, temperaturisolierten Prüfraum einer Prüfkammer angeordnet.

## Patentansprüche

1. Prüfkammer zur Konditionierung von Luft, umfassend einen gegenüber einer Umgebung verschließbaren und temperaturisolierten Prüfraum zur Aufnahme von Prüfgut, und eine Temperiervorrichtung zur Temperierung des Prüfraums, wobei mittels der Temperiervorrichtung eine Temperatur in einem Temperaturbereich von -60 °C bis +180 °C innerhalb des Prüfraums ausbildbar ist, wobei die Temperiervorrichtung eine Kühleinrichtung (10, 23, 30, 36, 43) mit einem Kühlkreislauf (11, 24, 39, 44) mit einem Kältemittel, zumindest einem Wärmeübertrager (12, 25, 47), einem Verdichter (13, 26), einem Kondensator (14, 27, 38) und einem Expansionsorgan (15, 28) aufweist, wobei das Kältemittel in dem Wärmeübertrager eine Phasenänderung durchläuft,
**dadurch gekennzeichnet,**
**dass** das Kältemittel ein Kältemittelgemisch aus einem Masseanteil Kohlendioxid (CO₂) und einem Masseanteil mindestens einer weiteren Komponente ist, wobei die weitere Komponente Pentafluorethan (C₂HF₅) ist, wobei der Masseanteil Kohlendioxid an dem Kältemittelgemisch 30 bis 33 Masseprozent beträgt, wobei der Masseanteil Pentafluorethan 67 bis 70 Masseprozent beträgt.

2. Prüfkammer nach Anspruch 1,
**dadurch gekennzeichnet,**
**dass** ein Masseanteil Kohlendioxid 31 Masseprozent und ein Masseanteil Pentafluorethan 69 Masseprozent beträgt.

3. Prüfkammer nach Anspruch 1 oder 2,
**dadurch gekennzeichnet,**
**dass** das Kältemittelgemisch als binäres Gemisch ausgebildet ist.

4. Prüfkammer nach Anspruch 1,
**dadurch gekennzeichnet,**
**dass** das Kältemittelgemisch als eine zusätzliche Komponente Trifluorethylen, 1,1-Difluorethen (C₂H₂F₂) oder Fluorethen (C₂H₃F) aufweist.

5. Prüfkammer nach einem der vorangehenden Ansprüchen,
**dadurch gekennzeichnet,**
**dass** das Kältemittel ein zeotropes Kältemittel ist und einen Temperaturglide von ≥ 10 K, bevorzugt ≥ 15 K, besonders bevorzugt ≥ 18 K aufweist.

6. Prüfkammer nach einem der vorangehenden Ansprüchen,
**dadurch gekennzeichnet,**
**dass** das Kältemittel ein relatives CO2-Äquivalent, bezogen auf 20 Jahre, von< 2500, bevorzugt < 1500, besonders bevorzugt < 500, aufweist.

7. Prüfkammer nach einem der vorangehenden Ansprüchen,
**dadurch gekennzeichnet,**
**dass** das Kältemittel nicht brennbar ist.

8. Prüfkammer nach einem der vorangehenden Ansprüche,
**dadurch gekennzeichnet,**
**dass** der Kühlkreislauf (11, 24, 39, 44) einen internen Wärmeübertrager (19, 29, 46) aufweist, wobei der interne Wärmeübertrager an einer Hochdruckseite (17) des Kühlkreislaufs in einer Strömungsrichtung vor dem Expansionsorgan (15, 28) und nachfolgend dem Kondensator (14, 27, 38), und an einer Niederdruckseite (18) des Kühlkreislaufs in einer Strömungsrichtung vor dem Verdichter (13, 26) und nachfolgend dem Wärmeübertrager (12, 25, 47) angeschlossen ist.

9. Prüfkammer nach einem der vorangehenden Ansprüche,
**dadurch gekennzeichnet,**
**dass** der Wärmeübertrager (12, 25, 47) derart dimensioniert ausgebildet ist, dass das Kältemittel nur teilweise in dem Wärmeübertrager verdampfen kann.

10. Prüfkammer nach einem der vorangehenden Ansprüche,
**dadurch gekennzeichnet,**
**dass** der Kondensator (14, 27, 38) als ein Kaskaden-Wärmeübertrager (40) eines weiteren Kühlkreislaufs (36, 43) der Kühleinrichtung ausgebildet ist.

11. Prüfkammer nach einem der vorangehenden Ansprüche,
**dadurch gekennzeichnet,**
**dass** die Temperiervorrichtung eine Heizeinrichtung mit einer Heizung und einem Heiz-Wärmeübertrager in dem Prüfraum aufweist.

12. Prüfkammer nach einem der vorangehenden Ansprüche,
**dadurch gekennzeichnet,**
**dass** in dem Kühlkreislauf (24, 39, 44) ein erster Bypass (31) mit zumindest einem regelbaren zweiten Expansionsorgan (33) ausgebildet ist, wobei der erste Bypass in einer Strömungsrichtung vor dem internen Wärmeübertrager (29, 46) und nachfolgend dem Kondensator (27, 38) an den Kühlkreislauf angeschlossen ist, wobei der erste Bypass als regelbare interne Ergänzungskühlung (34) ausgebildet ist.

13. Verwendung eines Kältemittels bestehend aus einem Kältemittelgemisch aus einem Masseanteil Kohlendioxid (CO₂) von 30 bis 33 Masseprozent und einem Masseanteil mindestens einer weiteren Komponente, wobei die weitere Komponente Pentafluorethan (C₂HF₅) ist, wobei der Masseanteil Pentafluorethan 67 bis 70 Masseprozent beträgt, zur Konditionierung von Luft in einem gegenüber einer Umgebung verschließbaren und temperaturisolierten Prüfraum einer Prüfkammer zur Aufnahme von Prüfgut, wobei mittels einer Kühleinrichtung (10, 23, 30, 36, 43) einer Temperiervorrichtung der Prüfkammer, mit einem Kühlkreislauf (11, 24, 39, 44) mit dem Kältemittel, einem Wärmeübertrager (12, 25, 47), einem Verdichter (13, 26), einem Kondensator (14, 27, 38) und einem Expansionsorgan (15, 25, 28), eine Temperatur in einem Temperaturbereich von -60 °C bis +180 °C, bevorzugt -70 °C bis +180 °C, besonders bevorzugt -80 °C bis +180 °C, innerhalb des Prüfraums ausgebildet wird.

14. Verwendung nach Anspruch 13,
**dadurch gekennzeichnet,**
**dass** mittels eines internen Wärmeübertragers (19, 29, 46) des Kühlkreislaufs (11, 24, 39, 44), angeschlossen an einer Hochdruckseite (17) des Kühlkreislaufs in einer Strömungsrichtung vor dem Expansionsorgan (15, 25, 28) und nachfolgend dem Kondensator (14, 27, 38), und an einer Niederdruckseite (18) des Kühlkreislaufs in einer Strömungsrichtung vor dem Verdichter (13, 26) und nachfolgend dem Wärmeübertrager (12, 25, 47), das Kältemittel der Hochdruckseite gekühlt wird, wobei die Kühlung des Kältemittels der Hochdruckseite mittels des internen Wärmeübertragers zur Absenkung einer Verdampfungstemperatur am Expansionsorgan genutzt wird.

15. Verwendung nach Anspruch 13 oder 14,
**dadurch gekennzeichnet,**
**dass** das Kältemittel der Hochdruckseite (17) von dem Kältemittel der Niederdruckseite (18) bei einem konstanten Saugdruck auf der Niederdruckseite mittels des internen Wärmeübertragers (19, 29, 46) gekühlt wird.

## Claims

1. A test chamber for conditioning air, the test chamber comprising a temperature-insulated test space which serves to receive test material and which is configured to be sealed against an environment, and a temperature control device for controlling the temperature of the test space, the temperature control device being configured to establish a temperature in a temperature range of -60 °C to +180 °C within the test space, the temperature control device having a cooling device (10, 23, 30, 36, 43) with a cooling circuit (11, 24, 39, 44) with a refrigerant, at least one heat exchanger (12, 25, 47), a compressor (13, 26), a condenser (14, 27, 38), and an expansion element (15, 28), the refrigerant undergoing a phase change in the heat exchanger,
**characterized in that**
the refrigerant is a refrigerant mixture composed of a mass fraction of carbon dioxide (CO₂) and a mass fraction of at least one other component, the other component being pentafluoroethane (C₂HF₅), the mass fraction of carbon dioxide in the refrigerant mixture being 30 to 33 mass percent, the mass fraction of pentafluoroethane being 67 to 70 mass percent.

2. The test chamber according to claim 1,
**characterized in that**
a mass fraction of carbon dioxide is 31 mass percent, and a mass fraction of pentafluoroethane is 69 mass percent.

3. The test chamber according to claim 1 or 2,
**characterized in that**
the refrigerant mixture is a binary mixture.

4. The test chamber according to claim 1,
**characterized in that**
the refrigerant mixture comprises trifluoroethylene, 1,1-difluoroethene (C₂H₂F₂) or fluoroethene (C₂H₃F) as an additional component.

5. The test chamber according to any one of the preceding claims,
**characterized in that**
the refrigerant mixture is a zeotropic refrigerant and has a temperature glide of ≥ 10 K, preferably ≥ 15 K, particularly preferably ≥ 18 K.

6. The test chamber according to any one of the preceding claims,
**characterized in that**
the refrigerant has a relative CO2 equivalent of < 2500, preferably < 1500, particularly preferably < 500, over 20 years.

7. The test chamber according to any one of the preceding claims,
**characterized in that**
the refrigerant is nonflammable.

8. The test chamber according to any one of the preceding claims,
**characterized in that**
the cooling circuit (11, 24, 39, 44) has an internal heat exchanger (19, 29, 46), the internal heat exchanger being connected to a high-pressure side (17) of the cooling circuit upstream of the expansion element (15, 28) and downstream of the condenser (14, 27, 38) and to a low-pressure side (18) of the cooling circuit upstream of the compressor (13, 26) and downstream of the heat exchanger (12, 25, 47).

9. The test chamber according to any one of the preceding claims,
**characterized in that**
the heat exchanger (12, 25, 47) is dimensioned in such a manner that the refrigerant can only partially vaporize in the heat exchanger.

10. The test chamber according to any one of the preceding claims,
**characterized in that**
the condenser (14, 27, 38) is a cascade heat exchanger (40) of another cooling circuit (36, 43) of the cooling device.

11. The test chamber according to any one of the preceding claims,
**characterized in that**
the temperature control device has a heating device comprising a heater and a heating heat exchanger in the test space.

12. The test chamber according to any one of the preceding claims,
**characterized in that**
a first bypass (31) having at least one controllable second expansion element (33) is realized in the cooling circuit (24, 39, 44), the first bypass being connected to the cooling circuit upstream of the internal heat exchanger (29, 46) and downstream of the condenser (27, 38), the first bypass being realized as an additional controllable internal cooling (34).

13. A use of a refrigerant consisting of a refrigerant mixture composed of a mass fraction of carbon dioxide (CO₂) of 30 to 33 mass percent and a mass fraction of at least one other component, the other component being pentafluoroethane (C₂HF₅), the mass fraction of pentafluoroethane being 67 to 70 mass percent, for conditioning air in a temperature-insulated test space of a test chamber, the test space serving to receive test material and being sealed against an environment, a cooling device (10, 23, 30, 36, 43) of a temperature control device of the test chamber with a cooling circuit (11, 24, 39, 44) with the refrigerant, a heat exchanger (12, 25, 47), a compressor (13, 26), a condenser (14, 27, 38) and an expansion element (15, 25, 28), being used to establish a temperature in a temperature range of -60 °C to +180 °C, preferably -70 °C to +180 °C, particularly preferably -80 °C to +180 °C, within the test space.

14. The use according to claim 13,
**characterized in that**
an internal heat exchanger (19, 29, 46) of the cooling circuit (11, 24, 39, 44), which is connected to a high-pressure side (17) of the cooling circuit upstream of the expansion element (15, 25, 28) and downstream of the condenser (14, 27, 38) and to a low-pressure side (18) of the cooling circuit upstream of the compressor (13, 26) and downstream of the heat exchanger (12, 25, 47), is used to cool the refrigerant of the high-pressure side, the cooling of the refrigerant of the high-pressure side by means of the internal heat exchanger being used to lower an evaporation temperature at the expansion element.

15. The use according to claim 13 or 14,
**characterized in that**
the refrigerant of the high-pressure side (17) is cooled by the refrigerant of the low-pressure side (18) at a constant suction pressure on the low-pressure side by means of the internal heat exchanger (19, 29, 46).

## Revendications

1. Chambre d'essai pour le conditionnement de l'air, la chambre d'essai comprenant un espace d'essai thermiquement isolé qui sert à recevoir une matière d'essai et qui peut être fermé par rapport à un environnement, et un dispositif de régulation de température pour réguler la température de l'espace d'essai, le dispositif de régulation de température étant configuré pour établir une température dans une plage de température de -60 °C à +180 °C dans l'espace d'essai, le dispositif de régulation de température ayant un dispositif de refroidissement (10, 23, 30, 36, 43) avec un circuit de refroidissement (11, 24, 39, 44) avec un réfrigérant, au moins un échangeur de chaleur (12, 25, 47), un compresseur (13, 26), un condenseur (14, 27, 38) et un organe d'expansion (15, 28), le réfrigérant subissant un changement de phase dans l'échangeur de chaleur,
**caractérisée en ce que**
le réfrigérant est un mélange de réfrigérant se composant d'une fraction massique de dioxyde de carbone (CO₂) et d'une fraction massique d'au moins un autre composant, l'autre composant étant le pentafluoroéthane (C₂HF₅), la fraction massique de dioxyde de carbone dans le réfrigérant étant de 30 à 33 pourcent en masse, la fraction massique de pentafluoroéthane étant de 67 à 70 pourcent en masse.

2. Chambre d'essai selon la revendication 1,
**caractérisée en ce**
**qu'**une fraction massique de dioxyde de carbone es 31 pourcent en masse et une fraction massique de pentafluoroéthane est 69 pourcent en masse.

3. Chambre d'essai selon la revendication 1 ou 2,
**caractérisée en ce que**
le mélange de réfrigérant est un mélange binaire.

4. Chambre d'essai selon la revendication 1,
**caractérisée en ce que**
le mélange de réfrigérant comprend le trifluoroéthylène, le 1,1-difluoroéthène (C₂H₂F₂) ou le fluoroéthène (C₂H₃F) comme composant additionnel.

5. Chambre d'essai selon l'une quelconque des revendications précédentes,
**caractérisée en ce que**
le réfrigérant est un réfrigérant zéotropique et a un glissement de température de ≥ 10 K, de préférence ≥ 15 K, de préférence particulière ≥ 18 K.

6. Chambre d'essai selon l'une quelconque des revendications précédentes,
**caractérisée en ce que**
le réfrigérant a un équivalent CO2 de < 2500, de préférence < 1500, de préférence particulière < 500, sur 20 ans.

7. Chambre d'essai selon l'une quelconque des revendications précédentes,
**caractérisée en ce que**
le réfrigérant est incombustible.

8. Chambre d'essai selon l'une quelconque des revendications précédentes,
**caractérisée en ce que**
le circuit de refroidissement (11, 24, 39, 44) a un échangeur de chaleur interne (19, 29, 46), l'échangeur de chaleur interne étant lié à un côté haute pression (17) du circuit de refroidissement en amont de l'organe d'expansion (15, 28) et en aval du condenseur (14, 27, 38) et à un côté basse pression (18) du circuit de refroidissement en amont du compresseur (13, 26) et en aval de l'échangeur de chaleur (12, 25, 47).

9. Chambre d'essai selon l'une quelconque des revendications précédentes,
**caractérisée en ce que**
l'échangeur de chaleur (12, 25, 47) est dimensionné de telle manière que le réfrigérant ne peut évaporer que partiellement dans l'échangeur de chaleur.

10. Chambre d'essai selon l'une quelconque des revendications précédentes,
**caractérisée en ce que**
le condenseur (14, 27, 38) est un échangeur de chaleur (40) en cascade d'un autre circuit de refroidissement (36, 43) du dispositif de refroidissement.

11. Chambre d'essai selon l'une quelconque des revendications précédentes,
**caractérisée en ce que**
le dispositif de régulation de température a un dispositif de chauffage comprenant un chauffage et un échangeur de chaleur chauffant dans l'espace d'essai.

12. Chambre d'essai selon l'une quelconque des revendications précédentes,
**caractérisée en ce**
**qu'**une première dérivation (31), qui a au moins un deuxième organe d'expansion (33) réglable, est formée dans le circuit de refroidissement (24, 39, 44), la première dérivation étant liée au circuit de refroidissement en amont de l'échangeur de chaleur interne (29, 46) et en aval du condenseur (27, 38), la première dérivation formant un refroidissement interne (34) réglable additionnelle.

13. Utilisation d'un réfrigérant consistant en mélange de réfrigérant se composant d'une fraction massique de dioxyde de carbone (CO₂) de 30 à 33 pourcent en masse et d'une fraction massique d'au moins un autre composant, l'autre composant étant le pentafluoroéthane (C₂HF₅), une fraction massique de pentafluoroéthane étant 67 à 70 pourcent en masse, pour le conditionnement de l'air dans un espace d'essai d'une chambre d'essai, l'espace d'essai étant thermiquement isolé et servant à recevoir une matière d'essai et étant fermé par rapport à un environnement, un dispositif de refroidissement (10, 23, 30, 36, 43) d'un dispositif de régulation de température de la chambre d'essai, qui comprend un circuit de refroidissement (11, 24, 39, 44) avec le réfrigérant, un échangeur de chaleur (12, 25, 47), un compresseur (13, 26), un condenseur (14, 27, 38) et un organe d'expansion (15, 25, 28), étant utilisé pour établir une température dans une plage de température de -60 °C à +180 °C, de préférence -70 °C à +180 °C, de préférence particulière -80 °C à +180 °C, dans l'espace d'essai.

14. Utilisation selon la revendication 13,
**caractérisée en ce**
**qu'**un échangeur de chaleur interne (19, 29, 46) du circuit de refroidissement (11, 24, 39, 44), qui est lié à un côté haute pression (17) du circuit de refroidissement en amont de l'organe d'expansion (15, 25, 28) et en aval du condenseur (14, 27, 38) et à un côté basse pression (18) du circuit de refroidissement en amont du compresseur (13, 26) et en aval de l'échangeur de chaleur (12, 25, 47), est utilisé pour refroidir le réfrigérant du côté haute pression, le refroidissement du réfrigérant du côté haute pression à l'aide de l'échangeur de chaleur interne étant utilisé pour abaisser une température d'évaporation au niveau de l'organe d'expansion.

15. Utilisation selon la revendication 13 ou 14,
**caractérisée en ce que**
le réfrigérant du côté haute pression (17) est refroidi par le réfrigérant du côté basse pression (18) à une pression d'aspiration constante sur le côté basse pression au moyen de l'échangeur de chaleur interne (19, 29, 46).
